# EUROPEAN PATENT APPLICATION

(11) **EP 1 892 977 A1**
(43) Date of publication of application: **27.02.2008**
(21) Application number: 06017361.4
(22) Date of filing: 21.08.2006
(51) Int. Cl.: H04Q 7/38

(54) **Method for controlling a handover in a radio communications system**

(71) Applicant: Nokia Siemens Networks GmbH & Co. KG, 81541 München (DE)
(72) Inventor: Stadler, Thomas, 1130 Wien (AT); Unteregger, Burghard, 1040 Wien (AT)

(57) **Abstract**

In the method for controlling a handover in a radio communications system, wherein a connection between a user terminal (UE) and a first base station is to be transferred to a second base station, according to the invention, prior to receiving from the first base station a command message for transferring the connection to the second base station, the user terminal (UE) effects a synchronisation procedure to the second base station.

## Description

The invention relates to a method for controlling a handover in a radio communications system.

In present radio communications systems like GSM or UMTS, a so called handover (HO) is performed in order to guarantee that moving user terminals (UE; User Equipment) maintain good connections to base stations (NB; Node B) of the system. The decision on whether a HO is to be performed is based on measurement reports, wherein the radio network commands the user terminal to perform measurements and generate such measurement reports. The generated measurement reports are then transmitted to the network, i.e. to the currently serving base station, by the user terminal.

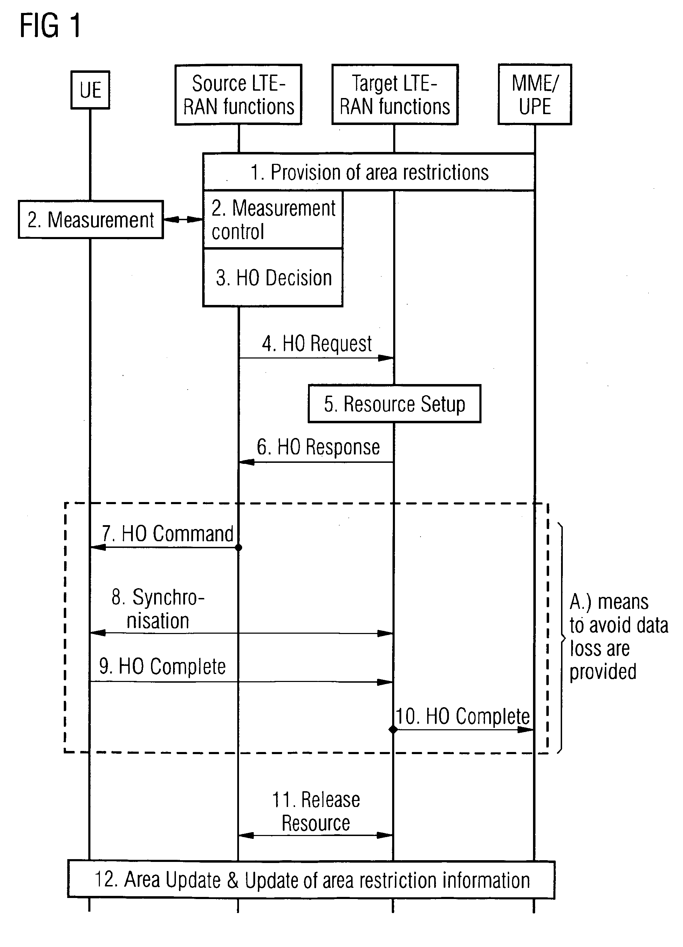

In the course of the so called LTE (Long Term Evolution) project of the 3GPP (3^{rd} Generation Partnership Project) for the evolution of the UMTS system, base stations, now called eNB, are made responsible for HO decisions. For LTE, it is proposed that in case of a HO decision by the source eNB, i.e. the base station to which the user terminal is currently attached to, this source eNB requests an allocation or reservation of radio resources at the target eNB, i.e. the base station to which the connection is transferred to, for the connection of the UE that triggered the HO decision by its measurement report. The current assumption for the handover procedure for LTE is that in case the target eNB accepts the HO request by setting up resources and confirming this in a HO response message to the source eNB, the source eNB will command the UE to perform the HO by transmitting a HO command message to the UE. As soon as the UE receives the HO command message it will initiate a synchronisation procedure. This procedure and further steps in the course of a handover are shown in figure 1.

One reason for the synchronisation procedure is to obtain correct timing information in the user terminal from the target eNB. Such timing information is e.g. the so called timing advance (TA). This is an important procedure as the UE must have correct TA values in order to control the timing of its transmissions to the target eNB. The choice of a wrong TA values would cause strong interference as signals from the UE would not be received in a correct time frame by the target eNB and thus collide with signals from other UEs received in the correct time frame. The request for the TA value can be performed by the UE using the so called random access channel (RACH). Alternatives to the usage of the RACH are currently discussed within the 3GPP standardisation, as e.g. non contention based channels with guard periods at the beginning and end.

As a disadvantage, the known synchronisation procedure, as discussed above and shown in figure 1, used for handover is time consuming, resulting in a prolongation of the entire handover procedure.

It is thus an object of the present invention to reduce the time needed for the conclusion of a handover in a radio communications system.

As shown in figure 1, synchronisation of the UE is performed after the target eNB decided whether or not the HO is acceptable and resources are set up, and in case the HO is allowed, it sends a HO response message to the source eNB and subsequently the source eNB sends a HO command message to the UE. Only after reception of this HO command message, the UE starts a synchronisation to the target eNB.

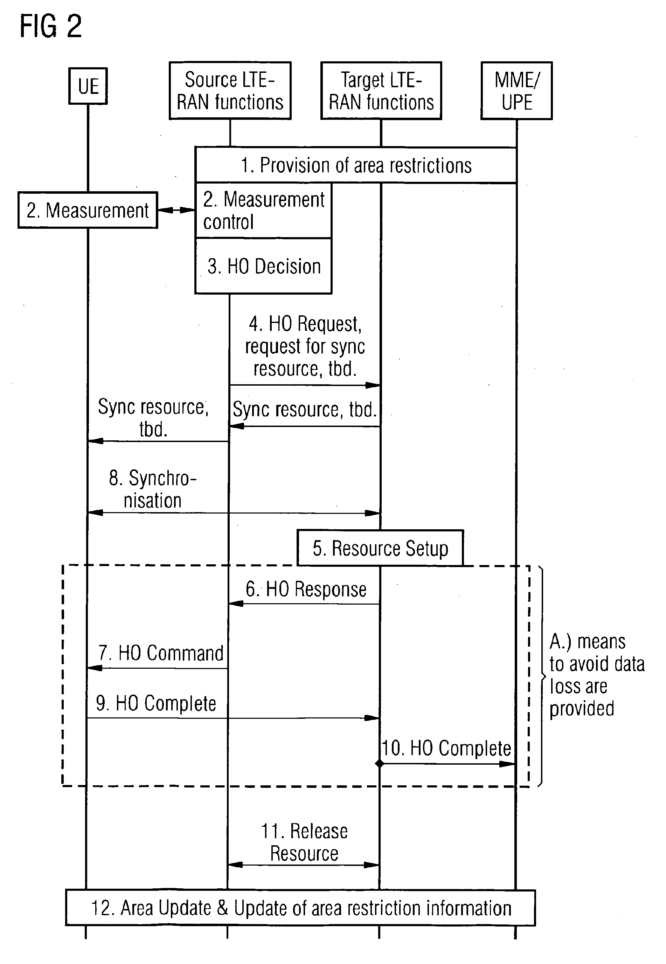

According to a first aspect of the invention, it is proposed to start the synchronisation procedure prior to the transmission of a HO command message to the UE. An example of such an amended procedure is shown in figure 2.

According to a further aspect of the invention, as shown in the exemplary step 4 of figure 2, the source eNB requests the assignment of resources from the target eNB to be used by the UE for the synchronisation procedure together with the HO request. These two requests may be transmitted in one single message or in two separate messages. Such a request for resources for the synchronisation procedure could be a request for RACH resources or other non contention based resources. Also, it is not excluded to request other additional information, relating e.g. to other aspects necessary for the handover procedure (indicated as "tbd" in figure 2).

After assignment of resources to be used for the synchronisation procedure by the UE, the target eNB transmits a message to the serving eNB indicating the assigned resources. The source eNB subsequently forwards information regarding the assignment of resources to the UE (and, where appropriate, further information ("tbd")) and commands the UE to start the synchronisation procedure based on the received information. The UE thus starts to synchronise to the target eNB, step 5 in figure 2, before actually receiving the handover command in step 7.

The following aspects and advantages arise from the procedure according to the invention:
- as the synchronisation procedure is started in advance, it can be performed in parallel to the decision process in the target eNB. There is thus no need to wait for the resource setup (step 5 in figures 1 and 2).
- The UE obtains the information on resources it may use for synchronisation (e.g. RACH resources) directly from the source eNB and thus doesn't have to read this information from a BCCH (Broadcast Control Channel). Reading the complete BCCH information would require more time in the UE than just receiving the information on the resources of the target eNB from the source eNB to which it is still connected to.
- If the UE performs the synchronisation procedure but, in case the target eNB does not accept the HO, does not receive a HO command from the source eNB, it withdraws the determined TA value.
- Further information may be requested in the exemplary step 4 of figure 2, e.g. a request for resources which the UE may use after the HO procedure has been completed.

In general, by applying the synchronisation procedure according to the invention, the time for the HO execution can be reduced significantly. This allows for faster HO to a cell providing better transmission conditions for the UE.

## Claims

1. Method for controlling a handover in a radio communications system, wherein a connection between a user terminal (UE) and a first base station is to be transferred to a second base station,
**characterised in that**
prior to receiving from said first base station a command message for transferring the connection to said second base station, the user terminal (UE) effects a synchronisation procedure to said second base station.

2. Method according to claim 1, wherein
with the request for a handover, the first base station requests an assignment of resources for the synchronisation procedure of the user terminal (UE) from the second base station.

3. Method according to any of the preceding claims, wherein the requests for a handover and the assignment of resources for the synchronisation procedure are transmitted in a single or separate messages from the first base station to the second base station.

4. Method according to claim 2 or 3, wherein
the resources assigned for the synchronisation procedure are random access channel resources.

5. Method according to any of the preceding claims 2 to 4, wherein
the assignment of resources for the synchronisation procedure are signalled to the user terminal by the first base station.

6. Method according to any of the preceding claims, wherein the first base station is a source base station and the second base station is a target base station in the course of the handover procedure.

7. Method according to any of the preceding claims, wherein the first and the second base station are each connected to a same or different radio communications systems.

8. Base station of a radio communications system, comprising means for requesting an assignment of resources from a further base station for effecting a synchronisation procedure between a user terminal and said further base station prior to a transmission of a handover command for a handover of a connection to said further base station, said connection being established between the base station and said user terminal.

9. Base station of a radio communications system, in particular a base station according to claim 8, comprising
means for receiving a request for assigning resources for effecting a synchronisation procedure with a user terminal in preparation of a handover of a connection between said user terminal and a further base station,
means for assigning at least one ressource of a number of ressources for the sychronisation procedure,
means for signalling said assignment to said further base station, and
means for effecting said synchronisation procedure with said user terminal.

10. User terminal, comprising
means for effecting a synchronisation procedure to a second base station prior to receiving a message for transferring a connection with a first base station to said second base station.
